# EUROPEAN PATENT SPECIFICATION

(11) **EP 1 759 974 B1**
(45) Date of publication and mention of the grant of the patent: **14.07.2010**
(21) Application number: 06015222.0
(22) Date of filing: 21.07.2006
(51) Int. Cl.: B62K 19/46, B62J 11/00

(54) **Motorcycle**
Motorrad
Motocyclette

(30) Priority: 31.08.2005 JP 2005252433
(43) Date of publication of application: 07.03.2007
(73) Proprietor: Honda Motor Co., Ltd., Tokyo 107-8556 (JP)
(72) Inventor: Atsuchi, Michio, Wako-shi, Saitama, 351-0193 (JP); Yano, Kengo, Wako-shi, Saitama, 351-0193 (JP); Hayashi, Hideki, Wako-shi, Saitama, 351-0193 (JP)
(74) Representative: Rupp, Christian

(56) References cited:
- EP-A1- 1 553 014
- DE-A1- 3 047 985
- JP-A- 2001 063 657
- US-A1- 2005 098 596
- US-B1- 6 349 785

## Description

The present invention relates to the arrangement of a storage room for storing personal property in a motorcycle with a storage room for storing helmets below a tandem seat.

A conventional motorcycle with a helmet storage room below a tandem seat in which the storage room can store two helmets has been known (for example, see Patent Document 1).
[Patent Document 1] JP-A No.2001-63657 (Fig. 12)

Fig. 12 of Patent Document 1 is a sectional left side view of the rear of a low floor type motorcycle where a motorcycle 1 (reference numerals here are those used in the gazette) has a storage box 40 and this storage box 40 includes a front box 40a below a main seat 41 where a rider is to sit and a rear box 40b below a tandem seat 42 where a co-rider is to sit. The front and rear boxes 40a and 40b can store helmets A and B.

Patent document US 2005/098596 A1 shows a luggage storage device for a motorcycle according to the preamble of claim 1. The helmet storage portions of the storage box are arranged such that the front helmet storage portion is disposed under a front seat and the rear helmet storage portion is disposed under the rear seat. Moreover, the storage box also comprises a rear expanded portion expanded backward beyond a rear end of the rear.

Meanwhile, there is a demand for the use of a larger diameter rear wheel for improvement in the running performance of a motorcycle. However, if a larger diameter rear wheel is simply used, the height of a co-rider seat from the ground (height from the road surface to the top surface of the seat) must be increased. As a consequence, the vehicle size must be larger.
A technique which can increase the outside diameter of a rear wheel without increasing the co-rider seat's height from the ground while ensuring a sufficient storage box capacity has been anticipated.

An object of the present invention is to provide a motorcycle which can increase the outside diameter of a rear wheel without increasing the co-rider seat's height from the ground.

The invention according to Claim 1 is characterized in that in a low floor type motorcycle with a storage room capable of storing two helmets below a tandem seat in which the storage room has two helmet rooms at the front and back, and these helmet rooms are referred to as a first helmet room and a second helmet room, and the first helmet room is located ahead of a rider's sitting point where a rider is to sit, the second helmet room is located behind a co-rider's sitting point where a co-rider is to sit, the motorcycle includes a unit swing type engine with an air cleaner, and the second helmet room is designed to store a helmet with its front surface facing sideways, and said storage room has a middle room which connects the first helmet room and the second helmet room, and the air cleaner is provided below the middle room.

The invention according to Claim 2 is characterized in that a fuel injector and a throttle body are provided below the middle room.

The invention according to Claim 3 is characterized in that a step is provided on a middle bottom surface constituting the bottom surface of the middle room, and when a surface before the step is referred to as a front bottom surface and a surface behind it is referred to as a rear bottom surface, the rear bottom surface is higher than the front bottom surface and a rear wheel is located below the rear bottom surface.

The invention according to Claim 4 is characterized in that a front end of the storage room extends more forward than a cylinder head and a rear end of the storage room extends more rearward than an axle of a rear wheel.

In the invention according to Claim 1, since in the storage room, the first helmet room is located ahead of the rider's sitting point where the rider is to sit, the rider's sitting point can be located in a way to avoid the first helmet room. Since the rider's sitting point can be located in a way to avoid the first helmet room, the height of the rider seat from the ground need not be increased and the ease with which the rider's feet touch the ground can be improved.

In the present invention, the first helmet room is located ahead of the rider's sitting point where the rider is to sit, and the second helmet room is located behind the co-rider's sitting point where the co-rider is to sit.

Since the second helmet room is located behind the co-rider's sitting point where the co-rider is to sit, the co-rider's sitting point can be located in a way to avoid the second helmet room.
Since the co-rider's sitting point can be located in a way to avoid the second helmet room, the height of the co-rider seat from the ground can be reduced.

In the invention according to Claim 2, since the storage room has a middle room which connects the first helmet room and the second helmet room, a long article can be stored.
In addition, since the fuel injector, throttle body and air cleaner are located below the middle room, air intake system parts can be concentrated. The concentration of air intake system parts enables effective use of the limited space and efficient arrangement of parts.

In the invention according to Claim 3, since the rear bottom surface as a constituent of the middle bottom surface is higher than the front bottom surface and the rear wheel is located below the rear bottom surface, it is possible to fit a larger diameter rear wheel. Alternatively, a large diameter rear wheel can be fitted with a longer stroke in the rear wheel height direction, for example, through the use of a long stroke rear cushion.

In the invention according to Claim 4, since the storage room has a middle room which connects the first helmet room and the second helmet room, and a front end of the storage room extends more forward than a cylinder head and a rear end of the storage room extends more rearward than an axle of a rear wheel, the storage room is located in a manner to cover the area from the front of the engine to the rear of the power transmission mechanism.
Since the storage room continuously covers the area from the front of the engine to the rear of the power transmission mechanism, the limited space can be effectively used and a long article can be stored.
Fig. 1 is a left side sectional view of a motorcycle according to the present invention.
Fig. 2 is a plan view of a motorcycle according to the present invention.
Fig. 3 is an enlarged sectional view of the rear of a motorcycle according to the present invention.
Fig. 4 illustrates vertical motion of the rear of a motorcycle.

The best mode for carrying out the invention will be described in reference to the accompanying drawings. Here, "front", "rear (back)", "left", "right", "above" and "below" denote directions as viewed from the rider's position. The drawings should be seen according to the orientation of reference numerals.

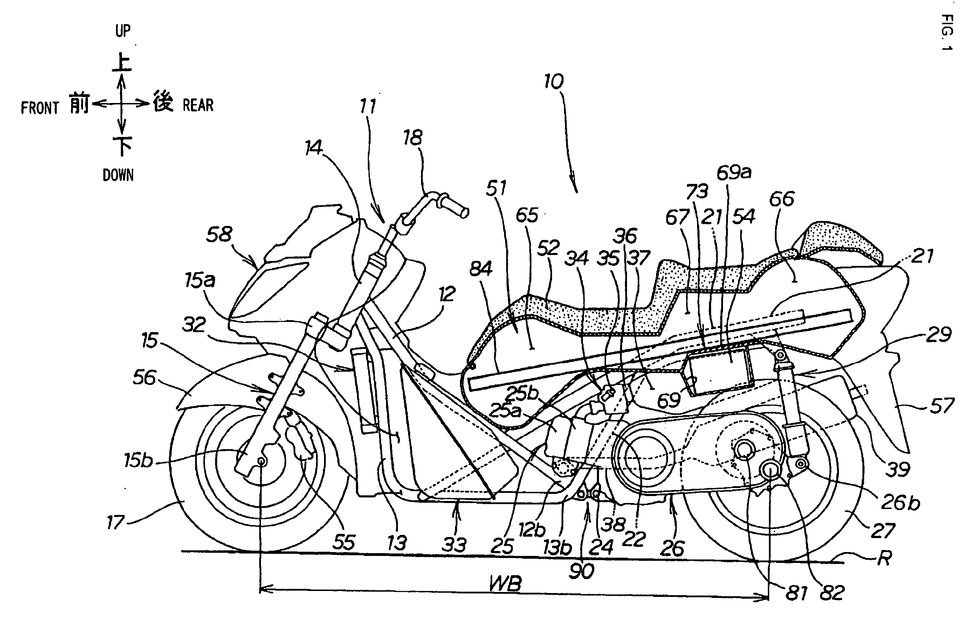

Fig.1 is a left side sectional view of a motorcycle according to the present invention, where a motorcycle 10 includes: a head pipe 14 attached to the front end of an upper frame 12 and the front end of a down frame 13 which constitute a body frame 11; a front fork 15 attached to this head pipe 14 in a way to be able to turn left and right; a seat rail 21 extending from the upper frame 12 rearward obliquely upward; a rear frame 22 supporting the seat rail 21 from below; an engine 25 which is disposed across the rear frame 22 and fitted in a vertically swingable manner through a link mechanism 90 including a pivot shaft 24 provided on the upper frame 12 and the rear end 13b of the down frame 13; a power transmission mechanism 26 which is integral with the engine 25 and extends toward the rear of the vehicle; a rear wheel 27 attached to this power transmission mechanism 26; and a rear cushion unit 29 which connects the rear end 26b of the power transmission mechanism 26 and the rear 21b of the seat rail 21.
Details of the link mechanism 90 will be described later.

The main body of the engine 25 and cooling, fuel supply, air intake and exhaust systems connected around the main body are described below.
The engine 25 is a water-cooled 4-cycle engine in which a cylinder block 25b is tilted forward. A cylinder head 25a is fitted to the front end of the engine 25. A radiator 32 for cooling the engine 25 is fitted to the down frame 13; a fuel tank 33 is located between the down frame 13 and the upper frame 12; a throttle body 34 and a fuel injector 35 for supplying fuel from the fuel tank 33 to the engine 25 are located behind the fuel tank 33 and above the engine 25; an air cleaner 37 for supplying air to the throttle body 34 is located under the seat rail 21; and an exhaust pipe 38 is located behind the engine 25 and a muffler 39 is located behind the exhaust pipe 38.
In the figure, a cooling water pipe which connects the radiator 32 and the engine 25 and a fuel pipe which connects the fuel tank 33 and the engine 25 are omitted.

A storage room 51 lies on the seat rail 21 from its front to its rear and a tandem seat 52 for riders to sit on is provided in a manner to be able to be opened and closed from above the storage room 51.

In other words, this motorcycle 10 is a low slung type vehicle with the storage room 51 below the tandem seat 52. The storage room 51 will be detailed later.

54 represents a battery which is housed in a battery housing 69 formed by denting part of a rear bottom surface 73 of a rear portion of a middle room 67 by an amount almost equivalent to the height of the battery 54. The battery housing 69's maintenance lid 69a is flush with the rear bottom surface 73.
55 represents a front brake unit; 56 a front fender; 57 a rear fender; and 58 a cowl member.

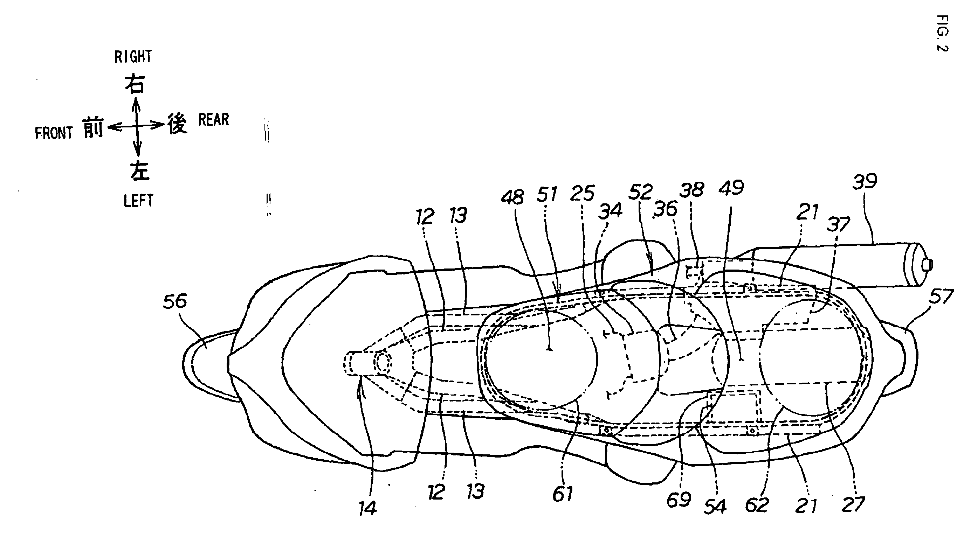

Fig. 2 is a plan view of a motorcycle according to the present invention, showing that the left and right upper frames 12 and down frames 13, 13 extend rearward from the head pipe 14; the left and right seat rails 21, 21 extend rearward from the upper frames 12, 12; the storage room 51 is fitted to the seat rails 21, 21; the tandem seat 52, composed of a rider seat 48 and a co-rider seat 49, covers the storage room 51 from above the storage room 51; and the storage room 51 can store a first helmet 61 and a second helmet 62.

The battery 54 is housed in the battery housing 69 formed in part of the storage room 51 as mentioned above. The battery 54 is located opposite to the air cleaner 37 and the muffler 39 in the vehicle width direction and on the same side as the power transmission mechanism 26.
This improves the left/right weight balance and ensures high space efficiency.

In this embodiment, the battery 54 is located on the left side of the vehicle and the air cleaner 37 and the muffler 39 are located on the right side of the vehicle; however, the invention is not limited thereto. For instance, there is no problem with an arrangement that the battery 54 is located on the right side of the vehicle and the air cleaner 37 and the muffler 39 on the left side of the vehicle.

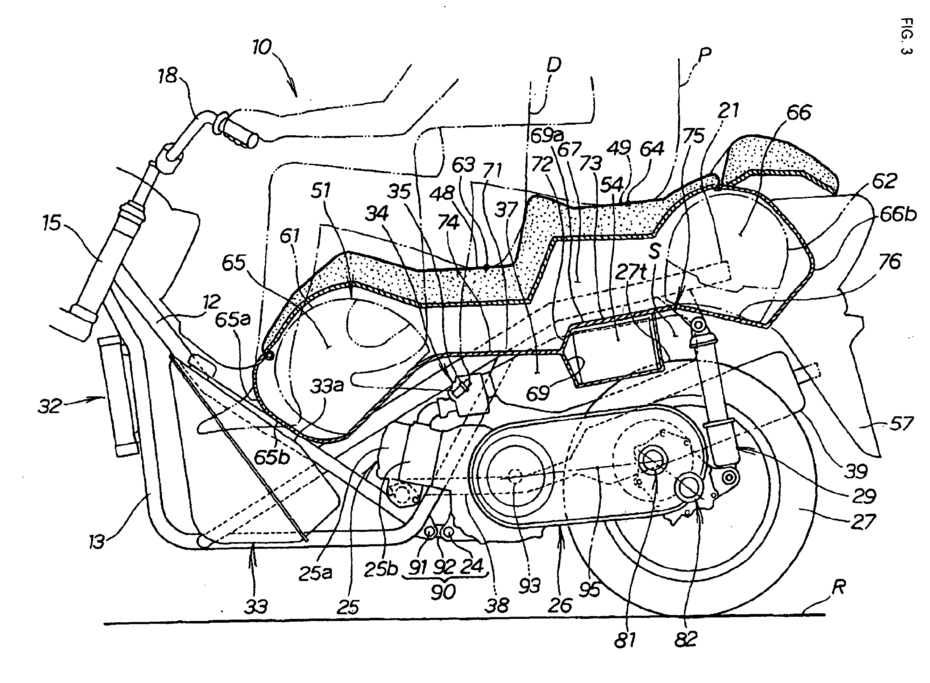

Fig. 3 is an enlarged sectional view of the rear of a motorcycle according to the present invention, where the storage room 51 fitted to the seat rail 21 is composed of a first helmet room 65 located at the front and ahead of a rider's sitting point 63 where rider D is to sit; a middle room 67 which is located behind, and connected with, the first helmet room 65; and a second helmet room 66 which is located behind, and connected with, the middle room 67 and located at the back and behind a co-rider's sitting point 64 where co-rider P is to sit.

Also, in this embodiment, it can be said that the front end 65a of the first helmet room 65 extends more forward than the cylinder head 25a and the rear end 66b of the second helmet room 66 extends more rearward than the axle 82 of the rear wheel 27.

The first helmet 61 can be stored with its front surface facing rearward and the second helmet 62 can be stored with its front surface facing sideways.
Since the helmet 62 is stored with its front surface facing sideways (sideways storage), the helmets can be stored efficiently while reducing the rearward extension of the storage room 51.
Although this embodiment employs the sideways storage method for the helmet 62, there is no problem in that the storage room 51 is so structured as to be able to store the helmet with its front surface facing forward or rearward.

A step 72 is provided on a middle bottom surface 71 constituting the bottom surface of the middle room 67, and a rear bottom surface 73 located more rearward than the step 72 is higher than a front bottom surface 74 located more forward than the step 72 so that a larger space is available for the rear wheel 27.

The rear bottom surface 73 is a surface which continues via a bending point 75 to the bottom surface 76 of the second helmet room 66. The bending point 75, located between the rear bottom surface 73 and the bottom surface 76, is a point which is designed to come close to a top 27t of the rear wheel 27 when an upward force is applied to the rear wheel 27 and the rear cushion unit 29 shrinks most. The bottom surface 76 is a surface tilted down rearward.

In this embodiment, the axle 82 of the rear wheel 27 is lower than a line 95 connecting a drive shaft 93 and an output shaft 81 as a driven shaft which are provided in the power transmission mechanism 26. Since the axle 82 of the rear wheel 27 is located obliquely rearward and downward from the output shaft 81, the wheel base of the motorcycle need not be long.

The power transmission mechanism 26, integral with the engine 25, is a member which also functions as a rear swing arm and the link mechanism 90 lies between the power transmission mechanisms 26 and the body frame 13.

The link mechanism 90 includes a support shaft 91 provided on the body frame 13 side, a link member 92 fitted to the support shaft 91, and a pivot shaft 24 fitted to the rear end of the link member 92; and rubber bushes are pressed into holes through which the support shaft 91 and pivot shaft 24 are passed. The power transmission mechanism 26 is fitted to the body frame 13 through the rubber bushes.

Since the rubber bushes exist between the body frame 13 and the power transmission mechanism 26, vibrations of the engine 25 and the power transmission mechanism 26 are hardly transmitted to the body frame 18.

In the storage room 51, the first helmet room 65 is located ahead of the rider's sitting point 63 where rider D is to sit and the second helmet room 66 is located behind the co-rider's sitting point 64 where co-rider P is to sit. This makes it possible to store at least two helmets 61 and 62.

Since the front wall 65b of the first helmet room 65 is tilted in a way to face the tilted portion 33a of the fuel tank 33, the storage efficiency of the storage room 65 can be increased while the required capacity of the fuel tank 33 is ensured.

In addition, the storage room 51 has the middle room 67 which connects the first helmet room 65 and the second helmet room 66; and the step 72 is provided on the middle bottom surface 71 constituting the bottom surface of the middle room 67; and when the surface before the step 72 is referred to as the front bottom surface 74 and the surface behind it is referred to as the rear bottom surface 73, the rear bottom surface 73 is higher than the front bottom surface 74 and the rear wheel 27 is located below the rear bottom surface 73.
Since the rear bottom surface 73 is higher than the front bottom surface 74 and the rear wheel 27 is located below the rear bottom surface 73, the space S available for the rear wheel 27 can be increased.

Since the rear bottom surface 73 as a constituent of the middle bottom surface 71 is higher than the front bottom surface 74 and the rear wheel 27 is located below the rear bottom surface 73, it is possible to fit a larger diameter rear wheel 27. Alternatively, a large diameter rear wheel can be fitted with a longer stroke in the height direction of the rear wheel 27, for example, through the use of a long stroke rear cushion.

Going back to Fig. 1, the storage room 51 has the middle room 67 which connects the first helmet room 65 and the second helmet room 66, and the fuel injector 35, throttle body 34 and air cleaner 37 are located below the middle room 67.
Since the storage room 51 has the middle room 67 which connects the first helmet room 65 and the second helmet room 66, a long article 84 can be stored.

In addition, since the fuel injector 35, throttle body 34 and air cleaner 37 are located below the middle room 67, air intake system parts can be concentrated. The concentration of air intake system parts enables effective use of the limited space and efficient arrangement of parts.

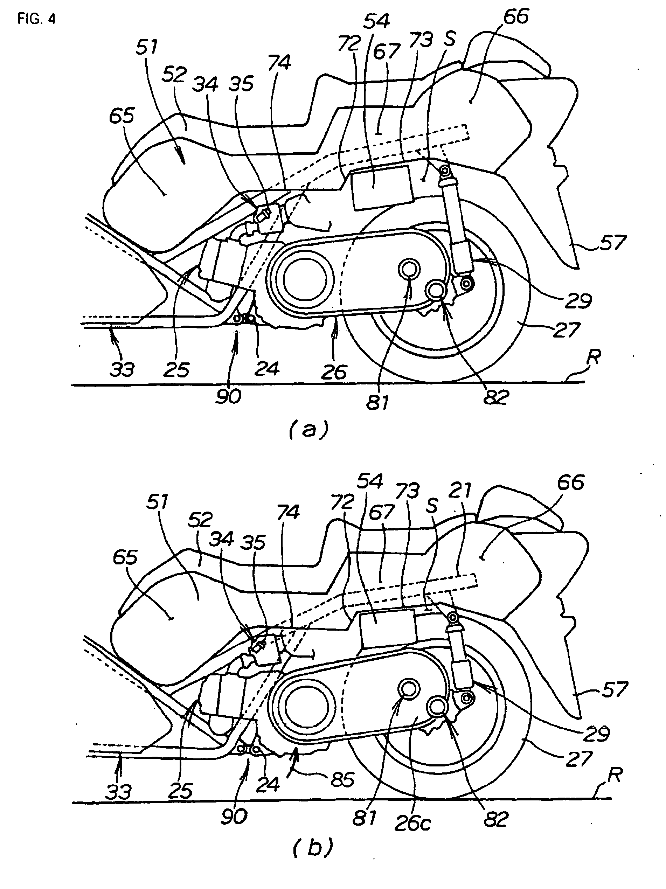

Fig. 4 illustrates vertical motion of the rear of the motorcycle.
(a) shows the posture of the rear of the motorcycle when it is running normally, where the engine 25 and the power transmission mechanism 26 are supported around the pivot shaft 24 in a vertically swingable manner, the rear cushion unit 29 is located between the seat rail 21 and the power transmission mechanism 26, and the rear bottom surface 73 is higher than the front bottom surface 74 with the step 72 as the boundary, so that a sufficient space for vertical stroke motion is available above the rear wheel 27.

(b) shows the posture of the rear of the motorcycle when the rear wheel 27 receives an upward impulsive force from a road surface R; as an upward impulsive force is applied to the rear wheel 27 due to an unevenness of the road surface R, etc. during running, the rear wheel 27 moves upward and the axle 82 of the rear wheel 27 turns around the pivot shaft 24 in the direction of arrow 85 and the rear cushion unit 29, which connects the rear 26c of the power transmission mechanism 26 and the seat rail 21, shrinks and thereby absorbs the impulsive force.
Since a sufficient space S for vertical stroke motion is available above the rear wheel 27, the rear wheel 27 can make a larger stroke motion.

In addition, since the axle 82 of the rear wheel 27 is lower than the line 95 connecting the drive shaft 93 and the output shaft 81 as a driven shaft which are provided in the power transmission mechanism 26, the rear wheel 27 can make a further larger stroke motion and the wheel base WB need not be long.

The effect of the motorcycle as mentioned above is described next.
Going back to Fig. 3, in the storage room 51, the first helmet room 65 is located ahead of the rider's sitting point 63 where rider D is to sit, which means that the rider's sitting point 63 can be located in a way to avoid the first helmet room 65.

Since the rider's sitting point 63 can be located in a way to avoid the first helmet room 65, the height of the rider seat 48 from the ground need not be increased.
Since the height of the rider seat 48 from the ground need not be increased, the ease with which the rider D's feet touch the ground is increased.

In addition, the second helmet room 66 is located behind the co-rider's sitting point 64 where co-rider P is to sit, which means that the co-rider's sitting point 64 can be located in a way to avoid the second helmet room 66.

Since the co-rider's sitting point 64 can be located in a way to avoid the second helmet room 66, the height of the co-rider seat 49 from the ground can be reduced.
Since the height of the co-rider seat 49 from the ground can be reduced, the diameter of the rear wheel 27 can be increased.

The present invention is suitable for motorcycles.
10...Motorcycle,
27...Rear wheel,
34...Throttle body,
35...Fuel injector,
37...Air cleaner,
51...Storage room,
52...Tandem seat,
61...First helmet,
62...Second helmet,
63...Rider's sitting point,
64...Co-rider's sitting point,
65...First helmet room,
66 ... Second helmet room,
67...Middle room,
71...Middle bottom surface of the middle room,
72...Step,
73...Rear bottom surface,
74...Front bottom surface,
D...Rider,
P...Co-rider

## Claims

1. A low floor type motorcycle (10) with a storage room (51) capable of storing two helmets below a tandem seat (52), in which the storage room (51) has two helmet rooms at the front and back, the helmet rooms are referred to as a first helmet room (65) and a second helmet room (66), and the first helmet room (65) is located ahead of a rider's sitting point (63) where a rider is to sit, wherein:
the second helmet room (66) is located behind a co-rider's sitting point (64) where a co-rider is to sit, and
said motorcycle (10) includes a unit swing type engine (25) with an air cleaner (37),
**characterized in that**
the second helmet room (66) is designed to store a helmet with its front surface facing sideways, and
said storage room (51) has a middle room (67) which connects the first helmet room (65) and the second helmet room (66), and said air cleaner (37) is provided below the middle room (67).

2. The motorcycle (10) according to claim 1,
wherein a fuel injector (35) and a throttle body (34) are provided below the middle room (67).

3. The motorcycle (10) according to any of the preceding claims,
wherein a step (72) is provided on a middle bottom surface constituting the bottom surface of the middle room (71), and when a surface before the step (72) is referred to as a front bottom surface (74) and a surface behind it is referred to as a rear bottom surface (73), the rear bottom surface (73) is higher than the front bottom surface (74) and a rear wheel (27) is located below the rear bottom surface (73).

4. The motorcycle (10) according to any of the preceding claims,
wherein a front end of the storage room (51) extends more forward than a cylinder head, and a rear end of the storage room (51) extends more rearward than an axle of a rear wheel (27).

## Patentansprüche

1. Niederflurmotorrad (10) mit einem Stauraum (51), der fähig ist, zwei Helme unter einem Doppelsitz (52) zu lagern, wobei der Stauraum (51) zwei Helmplätze vorne und hinten hat, wobei auf die zwei Helmplätze als ein erster Helmplatz (65) und ein zweiter Helmplatz (66) Bezug genommen wird und der erste Helmplatz (65) sich vor einem Sitzpunkt (63), wo ein Fahrer sitzen soll, befindet, wobei
der zweite Helmplatz (66) sich hinter einem Beifahrersitzpunkt (64), wo ein Beifahrer sitzen soll, befindet, und
das Motorrad (10) einen Einheitsmotor (10) vom Schwenktyp mit einem Luftreiniger (37) umfasst,
**dadurch gekennzeichnet, dass**
der zweite Helmplatz (66) konzipiert ist, um einen Helm mit dessen vorderer Oberfläche zur Seite gewandt zu lagern, und
der Stauraum (51) einen mittleren Raum (67) hat, der den ersten Helmplatz (56) und den zweiten Helmplatz (66) verbindet, und wobei der Luftreiniger (37) unterhalb des mittleren Raums (67) bereitgestellt ist.

2. Motorrad (10) gemäß Anspruch 1,
wobei ein Brennstoffeinspritzer (35) und ein Drosselkörper (34) unterhalb des mittleren Raums (67) bereitgestellt sind.

3. Motorrad (10) gemäß einem der vorhergehenden Ansprüche,
wobei eine Stufe (72) auf einer mittleren Bodenoberfläche bereitgestellt ist, welche die Bodenoberfläche des mittleren Raums (71) bildet, und, wenn auf eine Oberfläche vor der Stufe (72) als eine vordere Bodenoberfläche (74) Bezug genommen wird und auf eine Oberfläche hinter ihr als eine hintere Bodenoberfläche (73) Bezug genommen wird, die hintere Bodenoberfläche (73) höher als die vordere Bodenoberfläche (74) ist und ein Hinterrad (27) sich unterhalb der hinteren Bodenoberfläche (73) befindet.

4. Motorrad (10) gemäß einem der vorhergehenden Ansprüche,
wobei ein vorderes Ende des Stauraums (51) sich weiter nach vorn als ein Zylinderkopf erstreckt und ein hinteres Ende des Stauraums (51) sich weiter nach hinten als eine Achse des Hinterrads (27) erstreckt.

## Revendications

1. Motocyclette de type à plancher surbaissé (10) avec un emplacement de stockage (51) pouvant stocker deux casques au-dessous d'un siège à deux places (52), dans laquelle l'emplacement de stockage (51) a deux emplacements de casque à l'avant et à l'arrière, les emplacements de casque sont désignés comme étant un premier emplacement de casque (65) et un second emplacement de casque (66), et le premier emplacement de casque (65) est positionné devant un point d'assise (63) du motocycliste, où un motocycliste doit s'asseoir, dans laquelle :
le second emplacement de casque (66) est positionné derrière un point d'assise (64) du passager, où un passager doit s'asseoir, et
ladite motocyclette (10) comprend un moteur de type à unité oscillante (25) avec un filtre à air (37),
**caractérisée en ce que** :
le second emplacement de casque (66) est conçu pour stocker un casque avec sa surface avant orientée latéralement, et
ledit emplacement de stockage (51) a un emplacement central (67) qui raccorde le premier emplacement de casque (65) et le second emplacement de casque (66), et ledit filtre à air (37) est prévu au-dessous de l'emplacement central (67).

2. Motocyclette (10) selon la revendication 1, dans laquelle un injecteur de carburant (35) et un corps d'étrangleur (34) sont prévus au-dessous de l'emplacement central (67).

3. Motocyclette (10) selon l'une quelconque des revendications précédentes, dans laquelle une marche (72) est prévue sur une surface inférieure centrale constituant la surface inférieure de l'emplacement central (71) et lorsqu'une surface avant la marche (72) est désignée comme étant une surface inférieure avant (74) et une surface derrière celle-ci est désignée comme étant une surface inférieure arrière (73), la surface inférieure arrière (73) est plus haute que la surface inférieure avant (74) et une roue arrière (27) est positionnée au-dessous de la surface inférieure arrière (73).

4. Motocyclette (10) selon l'une quelconque des revendications précédentes, dans laquelle une extrémité avant de l'emplacement de stockage (51) s'étend plus vers l'avant qu'une culasse, et une extrémité arrière de l'emplacement de stockage (51) s'étend plus vers l'arrière qu'un essieu d'une roue arrière (27).
